(19) Europäisches Patentamt
European Patent Office
Office européen des brevets

(11) EP 1 086 161 B1

(12) # FASCICULE DE BREVET EUROPEEN

(45) Date de publication et mention de la délivrance du brevet:
**10.09.2003 Bulletin 2003/37**

(21) Numéro de dépôt: **99926415.3**

(22) Date de dépôt: **25.05.1999**

(51) Int Cl.[7]: **C08G 69/14**, C08L 77/00

(86) Numéro de dépôt international:
**PCT/EP99/03612**

(87) Numéro de publication internationale:
**WO 99/064496 (16.12.1999 Gazette 1999/50)**

(54) **POLYAMIDES A FLUIDITE ELEVEE, LEUR PROCEDE DE FABRICATION, COMPOSITIONS COMPRENANT CES COPOLYAMIDES**

POLYAMIDE MIT HOHER FLIESSFÄHIGKEIT, VERFAHREN ZU IHRER HERSTELLUNG UND ZUSAMMENSETZUNGEN, DIE DIESE COPOLYAMIDE ENTHALTEN

POLYAMIDES WITH HIGH FLUIDITY, METHOD FOR MAKING SAME, COMPOSITIONS COMPRISING SAID POLYAMIDES

(84) Etats contractants désignés:
**AT BE CH DE DK ES FI FR GB GR IE IT LI NL PT SE**

(30) Priorité: **11.06.1998 FR 9807533**

(43) Date de publication de la demande:
**28.03.2001 Bulletin 2001/13**

(73) Titulaire: **Rhodia Engineering Plastics Srl**
**20020 Ceriano Laghetto (MI) (IT)**

(72) Inventeurs:
- **DI SILVESTRO, Giuseppe**
  **I-Lentate Sul Seveso (IT)**
- **SPERONI, Franco**
  **I-20020 Ceriano Laghetto (IT)**
- **YUAN, Cuiming**
  **I-20126 Milano (IT)**
- **ZHANG, Haichun**
  **I-21047 Saronno (IT)**

(74) Mandataire: **Esson, Jean-Pierre et al**
**Rhodia Services,**
**Direction de la Propriété Industrielle,**
**Centre de Recherche Lyonnais,**
**BP 62**
**69192 Saint-Fons Cédex (FR)**

(56) Documents cités:
**EP-A- 0 377 259**
**WO-A-97/46747**
**DE-A- 4 312 182**
**FR-A- 2 743 077**

- **SCHAEFGEN J R ET AL: "SYNTHESIS OF MULTICHAIN POLYMERS AND INVESTIGATION OF THEIR VISCOSITIES" JOURNAL OF THE AMERICAN CHEMICAL SOCIETY, vol. 70, no. 8, août 1948 (1948-08), pages 2709-2718, XP000654891 cité dans la demande**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

EP 1 086 161 B1

Printed by Jouve, 75001 PARIS (FR)

## Description

L'invention concerne un polyamide comprenant des chaînes macromoléculaires présentant une configuration étoile, un procédé de fabrication de ce polyamide et les compositions comprenant ce copolyamide.

Ces dernières années ont vu le développement de polyamides à structure branchée, de polyamides comprenant des structures de type étoile. Ces polyamides peuvent être utilisés pour la fabrication de différents articles tels que des films, fils, fibres ou des articles moulés comprenant des charges ou non.

Toutefois, P.J. Flory avait dès 1948 (JACS 70 2709-18, 1948) étudié la synthèse d'un polyamide étoile par polymérisation de ε-caprolactame avec un composé comprenant quatre fonctions acides, à savoir le tétracarboxypropylcyclohexanone. Les résultats de ces travaux et les propriétés rhéologiques et mécaniques de ces polyamides étoiles ont été étudiés et confirmés par T.M. Warakonisky (Chem. Mat. 4-1000-4 1992 et US 4 435 548). Ainsi Warakonisky a confirmé la diminution de la viscosité du matériau à l'état fondu pour des masses moléculaires semblables, mais également montré une diminution importante des propriétés mécaniques par rapport à celles d'un polyamide linéaire.

Dans la demande de brevet FR-A-2743077, la Demanderesse a décrit un procédé de fabrication d'un polyamide comprenant un mélange de chaînes de type étoile et de chaînes linéaires. Un tel polyamide présente une fluidité en milieu fondu beaucoup plus élevé que celle du polyamide linéaire de masse moléculaire équivalente, mais à la différence des polyamides étoiles décrits par Flory et Warakonisky, des propriétés mécaniques d'un niveau équivalent à celui des polyamides linéaires de masse moléculaire équivalente.

Comme il est décrit dans la demande de brevet FR-A-2743077 citée précédemment, ce polyamide permet la réalisation d'articles moulés présentant des formes complexes sur des parties étroites ou de faible épaisseur. En outre, des compositions comprenant un taux élevé de charges de remplissage ou de renfort sont fabriquées et peuvent être utilisées dans les procédés de moulage usuels.

Ces propriétés mécaniques et rhéologiques intéressantes sont notamment obtenues quand la masse moléculaire en nombre du polyamide est supérieure à 15 000, et une concentration en nombre de chaînes linéaires est comprise entre 10 et 50 %, de prférence entre 15 et 30%.

La concentration en chaîne linéaire, ou en chaîne de type étoile peut être déterminée selon une méthode mise au point par Farina et al. et présentée pendant la 4° Convention Italienne sur la Science de la Macromolécule en 1979. Cette méthode est décrite dans le compte-rendu de ce congrès.

En résumé, cette méthode permet de calculer le rapport massique $X_W$ de polymère étoile dans le polyamide par détermination de la concentration en groupes terminaux amines et/ou acides. Dans le cas de la présence d'un composé polyfonctionnel (par exemple, d'un composé polycarboxylique), on peut définir la valeur $X_W$ par la relation suivante :

$$X_W = ([COOH] - [NH_2]) / [COOH]$$

L'indice de polymolécularité D représenté par $\frac{\overline{Mw}}{\overline{Mn}}$ peut être supérieur ou inférieur à 2 selon le taux de conversion du polymère.

Selon le procédé décrit dans la demande de brevet FR-A-2743077 la concentration en polyamide étoile et donc la fluidité en milieu fondu du polymère est déterminée d'une part par le rapport monomère polyfonctionnel / caprolactame et d'autre part, par la durée du procédé de polymérisation.

Comme le domaine de concentration en polyamide étoile pour lequel les propriétés mécaniques et rhéologiques sont optimales pour l'application recherchée est relativement étroit, la fabrication industrielle d'un tel polyamide requiert des procédures de conduite et contrôle de l'installation très difficiles à mettre en oeuvre de manière fiable.

En particulier, dans un procédé industriel il est très difficile de contrôler de manière précise l'obtention d'un taux de conversion correspondant au rapport massique $X_W$ en structure étoile désiré pendant l'étape de polymérisation.

Un des buts de la présente invention est, notamment, de proposer un nouveau procédé de fabrication des polyamides comprenant des chaînes de structure étoile et des chaînes linéaires permettant de maîtriser et contrôler aisément la concentration en chaînes étoiles pendant la polymérisation.

A cet effet, l'invention propose un procédé de fabrication d'un polyamide comprenant des chaînes macromoléculaires de structure étoile et des chaînes macromoléculaires linéaires consistant à polycondenser un mélange de monomères comprenant au moins :

a) des monomères de formule générale (I) suivante :

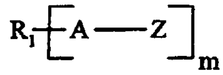 (I)

b) des monomères de formules générales (IIa) et (IIb) suivantes :

$$X\text{-}R_2\text{-}Y \qquad \text{(IIa)}$$

ou

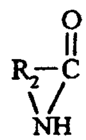 (IIb)

c) des monomères de formule générale (III) suivante :

$$Z\text{-}R_3\text{-}Z \qquad \text{(III)}$$

dans lesquelles :

- $R_1$ est un radical hydrocarboné comprenant au moins deux atomes de carbone, linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un groupement carboxylique
- $R_2$, $R_3$ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
- Y est un radical amine primaire quand X représente un radical carboxylique, ou
- Y est un radical carboxylique quand X représente un radical amine primaire,
- m étant un nombre entier compris entre 3 et 8.

La concentration molaire des monomères de formule I dans le mélange de monomères est comprise entre 0,1 % et 2 %, celle des monomères de formule III entre 0,1 % et 2 %, le complément à 100 % correspondant aux monomères de formules générales (IIa) ou (Ilb). La réaction de polymérisation est avantageusement réalisée jusqu'à l'obtention du degré de polymérisation maximal, en présence, éventuellement, d'un initiateur de polycondensation.

Par ailleurs, selon une caractéristique préférée de l'invention, le rapport molaire entre les monomères de formule (I) et les monomères de formule (III) est compris entre 2 et 8. Dans ces conditions, le procédé de l'invention permet d'obtenir de manière fiable et industrielle un polymère comprenant une concentration en chaînes de type étoile optimale pour des propriétés mécaniques et rhéologiques recherchées.

Ainsi, cette concentration en nombre de chaînes de type étoile est avantageusement comprise entre 50 et 90%, de préférence entre 70 et 85%.

Selon l'invention, le monomère de formule générale I comprend un radical $R_1$ qui peut être avantageusement un radical trivalent phényle, cyclohexanyle substitué ou non, des radicaux tétravalents de diaminopolyméthylène avec un nombre de groupes méthylènes compris avantageusement entre 2 et 12 tels que le radical provenant de l'EDTA (acide éthylène diamino tétracétique), les radicaux octovalents de cyclohexanonyle ou cyclohexadinonyle, les radicaux provenant de composés issus de la réaction des polyols tels que la glycérine, le sorbitol, le mannitol ou le pentaérythritol avec l'acrylonitrile.

Les radicaux $R_1$ préférés de l'invention sont les radicaux cycloaliphatiques tels que le radical tétravalent de cyclohexanonyle.

Le radical A est, de préférence, un radical méthylénique ou polyméthylénique tel que les radicaux éthyle, propyle ou butyle.

Selon un mode de réalisation préféré de l'invention, la lettre m représente un nombre entier supérieur à 3,

avantageusement égal à 4, 5 ou 6.

Selon une autre caractéristique de l'invention, le radical $R_3$ de formule générale III représente des radicaux polyméthyléniques pouvant comprendre de 2 à 36 atomes de carbone ou des radicaux cycloaliphatiques ou aromatiques.

A titre d'exemple, on peut citer comme composé de formule III, l'acide succinique, l'acide adipique, l'acide téréphtalique, l'acide isophtalique, l'acide sébacique, l'acide azélaïque, l'acide dodécanoïque, les dimères d'acides gras, le di(β-éthylcarboxy) cyclohexanone.

On peut également citer les composés diamines tels que l'hexaméthylène diamine, la méthyl-5 pentaméthylène diamine, la métaxylilène diamine, l'isophorone diamine, 1,4 diamine cyclohexane.

Les monomères de formule II sont avantageusement des lactames ou aminoacides tels que l'ε-caprolactame le lauryllactame, et leur ω-aminoacide.

Selon l'invention, la polycondensation est réalisée en présence d'un initiateur de polycondensation classiquement utilisé dans la synthèse des polyamides par polycondensation d'un lactame ou d'un aminoacide, tel que la synthèse du polycaproamide.

A titre d'exemple, on peut citer l'eau et les acides minéraux.

Cet initiateur est ajouté avantageusement à une concentration pondérale dans le mélange de monomères comprise entre 0,01 et 5 % en poids.

La polycondensation est réalisée selon des conditions de mise en oeuvre habituellement utilisées pour la polycondensation des aminoacides ou lactames sans composés polyfonctionnels de formule I.

Ainsi, le procédé de polycondensation comprend brièvement :

- un chauffage sous agitation et sous pression du mélange des monomères de formules I à III avec l'initiateur de polycondensation (généralement de l'eau),
- Maintien du mélange à cette température pendant une durée déterminée, puis décompression et maintien sous un courant de gaz inerte (par exemple de l'azote) pendant une durée déterminée à une température supérieure au point de fusion du mélange pour ainsi continuer la polycondensation par élimination de l'eau formée.

Selon la présente invention, la concentration molaire en chaînes linéaires ou chaînes de type étoile est déterminée par le rapport entre les composés difonctionnels de formule III et les composés multifonctionnels de formule I. En conséquence, la polymérisation est réalisée jusqu'à l'obtention d'une masse moléculaire maximale.

Bien entendu, la concentration molaire en chaînes de type étoile est également déterminée par la concentration molaire en monomère multifonctionnel de formule I dans le mélange de monomères.

Par ailleurs, le poids moléculaire du polymère est déterminée par la concentration molaire des monomères multifonctionnels de formule I et des monomères difonctionnels de formule IIa ou IIb.

Le modèle de calcul de la concentration en chaînes de type étoile utilisé était le modèle de FARINA décrit précédemment. Ce modèle est un modèle statique qui prend en considération uniquement et seulement la totalité des chaînes linéaires et la totalité des chaînes de type étoile présentes dans le polymère final. Le rapport $X_W$ défini précédemment est pris en compte.

Toutefois, le procédé de polymérisation est un procédé dynamique dans lequel, avant l'obtention d'une conversion totale du polymère, le milieu réactionnel comprend un mélange de chaînes moléculaires de types différents telles que celles correspondantes à une réaction avec un, deux ou trois fonctions du monomère polyfonctionnel. Ainsi, dans le cas d'un monomère tétracarboxylique, le milieu réactionnel comprend des chaînes dans lesquelles une, deux ou trois fonctions carboxyliques n'ont pas réagi.

Le modèle proposé par YUAN, et qui sera publiée ultérieurement dans une revue scientifique, considère la présence de ces différentes chaînes moléculaires et l'évolution dynamique de celles-ci.

Ainsi, avec ce modèle il est possible de calculer la quantité réelle de chaînes linéaires dans le polymère pour tout les degrés de conversion.

Dans le modèle dynamique de YUAN, une variable dynamique $X_d$ correspondant au taux de conversion fonctionnel du monomère polyfonctionnel est définie par l'expression suivante :

$$X_d = 1 - \frac{[COOH]}{n\,T_0 + N_0}$$

Dans laquelle :

$T_0$ représente le nombre de moles en monomère polyfonctionnel T de formule (I)
n représente la fonctionnalité du monomère polyfonctionnel T

$N_0$ représente le nombre de moles initiales en monomère N de formule ($II_a$) ou ($II_b$)

Le degré de polymérisation en nombre $DP_n$ est donné par l'expression suivante :

$$DP_n = \frac{N_0}{N_0\,(1 - X_d) - n\,T_0\,X_d + T_0\,[\,1 - (1 - X_d)^n]}$$

Le degré de polymérisation en masse $DP_W$ est exprimé selon la relation suivante :

$$DP_W = 1 + \frac{2\,X_d}{1 - X_d} + 12\,\frac{T_0}{N_0}\,(\frac{X_d}{1 - X_d})^2$$

La concentration molaire en chaînes de type étoile dans le polymère PS exprimée en % par rapport au nombre de chaînes totales est donnée par l'expression suivante :

$$PS = \frac{n\,T_0\,X_d^{\,3}\,(1 - X_d) + T_0\,X_d^{\,4}}{N_0\,(1 - X_d) - n\,T_0\,X_d + T_0\,[1 - (1 - X_d)^4]} \times 100$$

Dans le cas de l'invention, les expressions ci-dessus sont modifiées pour prendre en compte la présence des monomères R difonctionnels de formule (III).

Ainsi, les expressions peuvent s'écrire comme suit, en considérant comme monomère polyfonctionnel T un monomère tétrafonctionnel :

$$X_d = 1 - \frac{[COOH]}{2\,R_0 + 4\,T_0 + N_0}$$

$$DP_n = \frac{N_0}{N_0\,(1 - X_d) + 2R_0\,X_d - 4\,T_0\,X_d + R_0[1 - (1 - X_d)^2] + T_0\,[\,1 - (1 - X_d)^4]}$$

$$DP_W = 1 + \frac{2X_d}{1 - X_d} + 2\,(\frac{R_0}{N_0} + 6\,\frac{T_0}{N_0\,1})(\frac{X_d}{- X_d})2$$

$$PS = \frac{4\,T_0\,X_d^{\,3}\,(1 - X_d) + T_0\,X_d^{\,4}}{N_0\,(1 - X_d) - 2R_0X_d - 4\,T_0X_d + R_0\,[1 - (1 - X_d)^2] + T_0\,[1 - (1 - X_d)^4]} \times 100$$

Dans ces expressions $R_0$ représente la concentration molaire initiale en monomère de formule (III).

Enfin le degré de distribution D des chaînes est donné par la relation suivante :

$$D = \frac{DP_W}{DP_n}$$

Le procédé de l'invention permet donc d'obtenir un polyamide de poids moléculaire déterminé par détermination de la concentration molaire des monomères multifonctionnels de formule I et monomères difonctionnels de formule III dans le mélange de monomères, et avec un rapport en nombre chaîne type étoile/chaîne linéaire contrôlé par le rapport molaire entre ces deux types de monomères, pour une polymérisation réalisée jusqu'à l'équilibre thermodynamique de la réaction.

Ainsi, le procédé de fabrication des polyamides contenant un mélange de chaînes de type étoile et de chaînes linéaires est facilement réalisable et permet de fabriquer de manière reproductible et industrielle des polyamides présentant les propriétés rhéologiques et mécaniques optimales et désirées.

L'invention a également pour objet un polyamide obtenu par réaction de mélange de monomères décrits

précédemment.

Ce polyamide peut être utilisé pour la réalisation d'articles moulés par les techniques habituelles de mise en forme telles que extrusion, injection, filage par exemple.

Ainsi, le polymère en sortie de polycondensation peut être alimenté directement dans un des procédés énumérés ci-dessus, ou plus avantageusement, le polymère est mis sous forme de granulés, après mélange éventuel avec d'autres composants pour être utilisés comme matière première dans l'alimentation des procédés de mise en forme.

Par exemple, le polymère est refroidi avantageusement par de l'eau et extrudé sous forme de jonc. Ces joncs sont ensuite coupés pour produire les granulés.

Pour éliminer les polymères non condensés, notamment dans le cas où le monomère de formule llb est du caprolactame, les granulés sont lavés à l'eau puis séchés sous vide.

Avantageusement, le polyamide de l'invention est utilisé comme élément ou composant d'une matrice en matière thermoplastique d'une composition destinée à être mise en forme pour la fabrication de pièces moulées.

Une telle composition est également un objet de l'invention.

Selon l'invention, la composition comprend une matrice polymérique, avantageusement en matière thermoplastique et des charges modifiant les propriétés de la matrice telles que ses propriétés mécaniques, d'ignifugation, de conductivité thermique, électrique ou magnétique. Comme exemples de charges usuelles, on peut citer les charges de renfort ou charges de remplissage.

Selon l'invention, la matrice polymérique comprend comme constituant unique ou non le polyamide conforme à l'invention.

Comme le polyamide conforme à l'invention présente un indice de fluidité à l'état fondu plus élevé que les polyamides linéaires connus, pour des masses moléculaires et des propriétés mécaniques similaires, la composition chargée peut être injectée plus facilement dans un moule, c'est-à-dire à des cadences plus élevées. Elle permet également d'obtenir un remplissage plus homogène et complet des moules, notamment quand ceux-ci ont une forme complexe.

Le polyamide de l'invention permet également de réaliser des compositions contenant un taux de charges élevé pouvant être égal jusqu'à 80 % en poids par rapport à la composition totale.

Une telle composition peut être injectée grâce à l'indice élevé de fluidité à l'état fondu du polyamide de l'invention. Les propriétés mécaniques de cette composition sont élevées car elles sont généralement améliorées quand le taux de charge augmente.

Comme charges de remplissage ou de renfort convenables pour l'invention, on peut citer les charges utilisées habituellement pour renforcer les compositions en matière polymérique, telles que les charges fibreuses comprenant les fibres minérales telles que, par exemple, les fibres de verre, les fibres de carbone, les fibres de céramique, les fibres en matière synthétique telles que les fibres en polyaramides, les charges en poudre comme le talc, la montmorillonite, le kaolin, les billes et écailles de verre par exemple.

Des charges en poudre sont également utilisées pour améliorer l'ignifugation de la composition. De telles charges sont par exemple, des composés métalliques tels que l'hydroxyde de magnésium ou l'hydroxyde d'aluminium.

Les fibres de verre sont la charge de renfort préférée de l'invention.

Selon une autre caractéristique préférée de l'invention la matrice polymérique de la composition est constituée par un mélange du polyamide selon l'invention avec un ou plusieurs autres polymères, de préférence polyamides ou copolyamides.

Comme autres polymères préférés de l'invention, on peut citer les polyamides semicristallins ou amorphes, tels que les polyamides aliphatiques, polyamides semi-aromatiques et plus généralement, les polyamides linéaires obtenus par polycondensation entre un diacide saturé aliphatique ou aromatique, et une diamine primaire saturée aromatique ou aliphatique, un lactame, un aminoacide ou un mélange de ces différents monomères.

A titre d'exemple, on peut citer comme autre polymères le polyadipamide d'hexaméthylène, les polyphtalamides obtenus à partir d'acide téréphtalique et/ou isophtalique tels que le polyamide commercialisé sous le nom commercial AMODEL, les copolyamides obtenus à partir d'acide adipique, d'hexaméthylène diamine et de caprolactame.

Dans ce mode de réalisation, la concentration pondérale dans la matrice en polyamide selon l'invention peut varier dans un domaine large et est avantageusement comprise entre 30 et 80 % de la masse totale de matrice polymérique.

Les compositions de l'invention peuvent comprendre également tous les additifs usuels tels que ignifugeants, stabilisants chaleur et lumière, cires, pigments ou analogues.

De telles compositions sont utilisées pour réaliser des pièces moulées pour l'industrie automobile, la connectique, des composants électriques, des accessoires pour différentes activités telles que les activités sportives ou de loisir par exemple.

D'autres détails, avantages de l'invention apparaîtront plus clairement au vu des exemples donnés ci-dessous uniquement à titre indicatif et d'illustration.

Exemple 1 - Synthèse d'un polyamide conforme à l'invention

La polymérisation est réalisée dans un autoclave chauffé et comprenant des moyens d'agitation.

4444 g de caprolactame et 61 g de 2,2,6,6-tétra-(β-carboxyéthyl)-cyclohexanone sont ajoutés dans l'autoclave avec 160 g d'eau distillée et 5,6g d'acide adipique.

Le composé de cyclohexanone et son procédé de synthèse sont décrits dans l'article "The Chemistry of Acrylonitrile II - Reactions with Ketones" JACS 64 2850 (1942) de Herman Alexander Buison et Thomas W. Riener.

Le mélange, mis sous agitation, est chauffé à une température de 265°C sous 6 bars.

Il est maintenu à cette température et pression pendant 2 heures.

La concentration en chaîne étoile PS est calculée selon le modèle YUAN décrit ci-dessus.

Les résultats et propriétés du polyamide obtenu sont rassemblés dans le tableau 1 ci-dessous :

Exemple 2

L'exemple 1 est reproduit en utilisant comme monomère polyfonctionnel le monomère acide propylène diaminotétracétique (DPTA).

Les concentrations molaires en monomères tétrafonctionnels et difonctionnels sont identiques, ainsi que le rapport monomère difonctionnel /monomère tétrafonctionnel.

Les propriétés et composition du polyamide obtenu sont également indiqués dans le tableau I ci-dessous.

Exemples comparatifs

Des exemples comparatifs A, B, C sont également indiqués dans le tableau I.

L'exemple A correspond à un polyamide obtenu avec les monomères de l'exemple 1 à l'exception de l'acide adipique absent. La concentration en chaînes de type étoile est égale à environ 80 %.

L'exemple B est également obtenu avec les monomères de l'exemple 1, à l'exception de l'acide adipique. La concentration en chaînes de type étoile est égale à environ 100 %.

Les exemples A, B correspondent aux polyamides décrits dans la demande de brevet FR-2743077.

L'exemple C correspond à un polycaproamide obtenu par polymérisation de l'ε-caprolactame. La concentration en chaînes de type étoile est nulle.

Tableau 1

| Exemples | | 1 | 2 | A | B | C |
|---|---|---|---|---|---|---|
| Monomères | Caprolactame (% molaire) | 95 | 95 | 95 | 95 | 100 |
| | monomère multifonctionnel (% molaire) | 0,4 | 0,4 | 0,5 | 0,5 | - |
| | monomère difonctionnel (% molaire) | 0,1 | 0,1 | - | - | - |
| Taux de conversion | | 100 % | 100 % | 80 % | 100 % | - |
| Propriétés structurales | $\overline{Mn}$ | 22601 | 22601 | 18669 | 21722 | 19550 |
| | $\overline{Mw}$ | 30107 | 30107 | 26102 | 27904 | 39000 |
| | PS (%) | 80 | 80 | 82,5 | 95,9 | 0 |
| | PL (%) | 20 | 20 | 17,5 | 4,1 | 100 |
| | Fonctions terminales NH2 (meq/ g) | 7,2 | 14,5 | 18 | 12 | 48 |
| | Fonctions terminales COOH (meq/g) | 179 | 184 | 161 | 180 | 95 |

Tableau 1 (suite)

| Exemples | | 1 | 2 | A | B | C |
|---|---|---|---|---|---|---|
| Propriétés rhéologiques et mécaniques | Viscosité relative (1) | 2,27 | 2,2 | 2,16 | 2,05 | 2,7 |
| | Indice de fluidité en milieu fondu (g/10 min) (2) | 28 | 31 | 33 | 45 | 4 |
| | Choc Izod entaillé (J/m) | 5,2 | 5,3 | 5,8 | 3,2 | 5,5 |
| | Module (MPa) | 2694 | 2608 | 2706 | 2420 | 2750 |
| | Résistance à la traction (MPa) | 75 | 77 | 76 | 65 | 75 |

(1) Viscosité relative mesurée à partir d'une solution à 1% de polymère dans $H_2SO_4$ à 96%

(2) Indice de fluidité (MFI) déterminé selon la norme ASTM D1238

Ces résultats illustrent clairement que le procédé de l'invention permet d'obtenir un polymère de propriétés rhéologiques et mécaniques semblables à celui obtenu dans l'exemple comparatif pour lequel le taux de conversion en polymère étoile était de 80 %. Toutefois, le procédé de réalisation est d'un contrôle facile.

Compositions chargées

Des compositions comprenant une matrice en polyamide sont chargées avec des fibres de verre par mélange à l'état fondu en extrudeuse bi-vis type WERNER et PFLEIDERER ZSK 40.

Ainsi des compositions contenant 50 % en poids de fibres de verre sont réalisées respectivement avec un polyamide conforme à l'invention présentant un rapport massique en polymère étoile égal soit à 0,80 (exemple 1), un polyamide étoile avec un rapport massique égal à 0,96 (exemple B), ou un PA 6 classique(exemple C).

Les paramètres de réalisation du mélange et de l'extrusion sont rassemblés dans le tableau II suivant :

Tableau II

| Matrice | Polyamide Exemple C | Polyamide Exemple 1 | Polyamide Exemple B |
|---|---|---|---|
| Température d'extrusion | 250°C | 240°C | 240°C |
| Vitesse de rotation de la vis (tour par min.) | 260 | 260 | 260 |
| Débit de composition (Kg/h) | 40 | 40 | 40 |
| couple du moteur (N.m) | 42 | 25 | 23 |
| Puissance moteur absorbée exprimée en Ampère (A) | 34 | 27 | 25 |

Les propriétés de ces compositions sont rassemblées dans le tableau IV ci-après.

Tableau III

| Matrice | Polyamide Exemple 1 | Polyamide Exemple B | Polyamide Exemple C |
|---|---|---|---|
| Module (MPa) | 15500 | 15300 | 14200 |
| Indice de viscosité en milieu fondu g / 10 min | 18 | 15 | 7 |
| Choc Izod entaillé (J/m) | 12,8 | 13,3 | 16,6 |
| Choc Izod non entaillé (MPa) | 81 | 84,2 | 81,2 |
| HDT (°C) (1) | 202 | 204 | 203 |

(1) mesurée selon la norme ASTM D648 sous une charge de 1,82 $N/mm^2$

Tableau III (suite)

| Matrice | Polyamide Exemple 1 | Polyamide Exemple B | Polyamide Exemple C |
|---|---|---|---|
| Test spirale (cm) (2) | 75 | 60 | 36 |

(2) Ce test consiste à injecter la composition dans un moule en forme de spirale d'épaisseur 1mm et de largeur 40 mm sous une presse BATTENFELD de 180 tonnes à une température de 270°C, une température de moule de 80°C et une pression d'injection de 80 Kg/cm$^2$. La durée d'injection est de 1,5 secondes. Le résultat du test est déterminé par la longueur de moule remplie correctement par la composition.

## Revendications

**1.** Procédé de fabrication d'un polyamide comprenant des chaînes macromoléculaires linéaires et des chaînes macromoléculaires de type étoile **caractérisée en ce qu'**il consiste à réaliser la polymérisation d'un mélange de monomères comprenant au moins :

a) des monomères de formule générale (I) suivante :

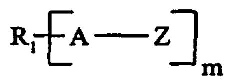 (I)

b) des monomères de formules générales (IIa) et (IIb) suivantes :

$$X\text{-}R_2\text{-}Y \quad \text{(IIa)}$$

ou

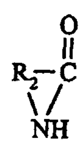 (IIb)

c) des monomères de formule générale (III) suivante :

$$Z\text{-}R_3\text{-}Z \quad \text{(III)}$$

dans lesquelles :

- $R_1$ est un radical hydrocarboné comprenant au moins deux atomes de carbone linéaire ou cyclique, aromatique ou aliphatique et pouvant comprendre des hétéroatomes,
- A est une liaison covalente ou un radical hydrocarboné aliphatique comprenant de 1 à 6 atomes de carbone,
- Z représente un radical amine primaire ou un groupement carboxylique
- $R_2$, $R_3$ identiques ou différents représentent des radicaux hydrocarbonés aliphatiques, cycloaliphatiques ou aromatiques substitués ou non comprenant de 2 à 20 atomes de carbone, et pouvant comprendre des hétéroatomes,
- Y est un radical amine primaire quand X représente un radical carboxylique, ou
- Y est un radical carboxylique quand X représente un radical amine primaire,
- m étant un nombre entier compris entre 3 et 8.

et **en ce que** la polymérisation est réalisée jusqu'à l'obtention de l'équilibre thermodynamique ; le rapport molaire entre les monomères de formule (I) et les monomères de formule (III) étant compris entre 2 et 8.

2. Procédé selon la revendication 1, **caractérisé en ce que** la concentration molaire en monomères de formule (I) est comprise entre 0,1 % et 2 % exprimé en % molaire par rapport à la totalité des monomères et la concentration molaire en monomères de formule (III) est comprise entre 0,1 % et 2 %, le complément à 100 % étant constitué par les monomères de formule (IIa) ou (IIb).

3. Procédé selon l'une des revendications précédentes, **caractérisé en ce qu'**il est mis en oeuvre en présence d'un agent initiateur de polycondensation.

4. Procédé selon l'une des revendications précédentes, **caractérisé en ce que** le radical $R_1$ est un radical cyclohexanoyle.

5. Procédé selon l'une des revendications précédentes, **caractérisé en ce que** $R_3$ est un radical polyméthylénique comprenant de 2 à 36 atomes de carbone.

6. Procédé selon l'une des revendications précédentes, **caractérisé en ce que** le monomère de formule (IIb) est l'ε-caprolactame.

7. Polyamide susceptible d'être obtenu selon le procédé décrit dans l'une des revendications 1 à 6, **caractérisé en ce qu'**il comprend un pourcentage en nombre de chaînes macromoléculaire de type étoile compris entre 50 % et 90 %.

8. Composition comprenant une matrice polymérique et des charges, **caractérisée en ce que** la matrice polymérique comprend au moins un polyamide susceptible d'être obtenu par un procédé selon l'une des revendications 1 à 6.

9. Composition selon la revendication 8, **caractérisée en ce qu'**elle comprend une matrice polymérique constituée par un polyamide susceptible d'être obtenu selon l'une des revendications 1 à 6.

10. Composition selon la revendication 8, **caractérisée en ce qu'**elle comprend une matrice polymérique constituée par un mélange d'un polyamide linéaire et d'un polyamide susceptible d'être obtenu par un procédé selon l'une des revendications 1 à 6.

11. Composition selon la revendication 10, **caractérisée en ce que** le polyamide selon les revendications 1 à 6 est présent à une concentration pondérale comprise entre 30 % et 80 % par rapport à la masse totale de la matrice polymérique.

12. Composition selon l'une des revendications 10 à 11, **caractérisée en ce que** le polyamide linéaire est choisi parmi les polyamides obtenus par polycondensation entre un diacide saturé aliphatique ou aromatique, et une diamine primaire saturée aromatique ou aliphatique, un lactame, un aminoacide ou un mélange de ces différents monomères.

13. Composition selon la revendication 12, **caractérisée en ce que** le polyamide linéaire est un polyamide ou copolyamide aliphatique et/ou semicristallin choisi dans le groupe comprenant PA 66, PA 6, PA 4.6, PA 12, ou un polyamide ou copolyamide semi-aromatique semicristallin choisi dans le groupe comprenant les polyphtalamides.

14. Composition selon l'une des revendications 8 à 13, **caractérisée en ce que** la concentration pondérale en charge est inférieure à 80 % en poids de la composition.

15. Composition selon l'une des revendications 8 à 14, **caractérisée en ce que** les charges sont des charges de renfort ou de remplissage choisies dans le groupe comprenant les charges fibreuses telles que fibres de verre, de carbone, minérale ou en matière thermodurcissable, les charges en poudre telles que le talc.

16. Composition selon l'une des revendications 8 à 15, **caractérisée en ce que** les charges sont des charges ignifugeantes.

**Patentansprüche**

1. Verfahren zur Herstellung eines Polyamids, das lineare makromolekulare Ketten und makromolekulare Ketten

vom Stemtyp umfasst, **dadurch gekennzeichnet, dass** es darin besteht, ein Gemisch von Monomeren zu polymerisieren, das wenigstens umfasst:

a) Monomere der folgenden allgemeinen Formel (I):

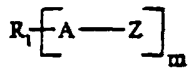

(I)

b) Monomere der folgenden allgemeinen Formeln (IIa) und (IIb):

$$X\text{-}R_2\text{-}Y \qquad \text{(IIa)}$$

oder

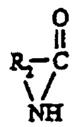

(IIb)

c) Monomere der folgenden allgemeinen Formel (III):

$$Z\text{-}R_3\text{-}Z \qquad \text{(III)}$$

worin:

- $R_1$ ein linearer oder cyclischer, aromatischer oder aliphatischer Kohlenwasserstoffrest ist, der wenigstens zwei Kohlenstoffatome umfasst und Heteroatome umfassen kann,
- A eine kovalente Bindung oder ein aliphatischer Kohlenwasserstoffrest mit 1 bis 6 Kohlenstoffatomen ist,
- Z einen primären Aminrest oder eine Carboxylgruppe darstellt,
- $R_2$, $R_3$, die gleich oder verschieden sind, aliphatische, cycloaliphatische oder aromatische, substituierte oder nicht substituierte Kohlenwasserstoffreste darstellen, die 2 bis 20 Kohlenstoffatome umfassen und Heteroatome umfassen können,
- Y ein primärer Aminrest ist, wenn X einen Carboxylrest darstellt, oder
- Y ein Carboxylrest ist, wenn X einen primären Aminrest darstellt,
- wobei m eine ganze Zahl zwischen 3 und 8 ist;

und dadurch, dass die Polymerisation bis zum Erhalt des thermodynamischen Gleichgewichts durchgeführt wird; wobei das Molverhältnis zwischen den Monomeren der Formel (I) und den Monomeren der Formel (III) zwischen 2 und 8 liegt.

**2.** Verfahren gemäß Anspruch 1, **dadurch gekennzeichnet, dass** die molare Konzentration an Monomeren der Formel (I) zwischen 0,1 % und 2 %, ausgedrückt in Mol-% bezogen auf die Gesamtheit der Monomere, liegt und die molare Konzentration an Monomeren der Formel (III) zwischen 0,1 % und 2 % liegt, wobei die Ergänzung auf 100 % von den Monomeren der Formel (IIa) oder (IIb) gebildet wird.

**3.** Verfahren gemäß einem der vorhergehenden Ansprüche, **dadurch gekennzeichnet, dass** es in Gegenwart eines Polykondensationsinitiators durchgeführt wird.

**4.** Verfahren gemäß einem der vorhergehenden Ansprüche, **dadurch gekennzeichnet, dass** der Rest $R_1$ ein Cyclohexanonylrest ist.

**5.** Verfahren gemäß einem der vorhergehenden Ansprüche, **dadurch gekennzeichnet, dass** $R_3$ ein Polymethylen-

rest mit 2 bis 36 Kohlenstoffatomen ist.

6. Verfahren gemäß einem der vorhergehenden Ansprüche, **dadurch gekennzeichnet, dass** das Monomer der Formel (IIb) ε-Caprolactam ist.

7. Polyamid, das erhalten werden kann gemäß dem in einem der Ansprüche 1 bis 6 beschriebenen Verfahren, **dadurch gekennzeichnet, dass** es in Zahlenprozent zwischen 50 % und 90 % an makromolekularen Ketten vom Sterntyp umfasst.

8. Zusammensetzung, umfassend eine Polymermatrix und Füllstoffe, **dadurch gekennzeichnet, dass** die Polymermatrix wenigstens ein Polyamid umfasst, das durch ein Verfahren gemäß einem der Ansprüche 1 bis 6 erhalten werden kann.

9. Zusammensetzung gemäß Anspruch 8, **dadurch gekennzeichnet, dass** sie eine Polymermatrix umfasst, die aus einem Polyamid besteht, das gemäß einem der Ansprüche 1 bis 6 erhalten werden kann.

10. Zusammensetzung gemäß Anspruch 8, **dadurch gekennzeichnet, dass** sie eine Polymermatrix umfasst, die aus einem Gemisch eines linearen Polyamids und eines Polyamids, das durch ein Verfahren gemäß einem der Ansprüche 1 bis 6 erhalten werden kann, besteht.

11. Zusammensetzung gemäß Anspruch 10, **dadurch gekennzeichnet, dass** das Polyamid gemäß den Ansprüchen 1 bis 6 in einer Gewichtskonzentration zwischen 30 % und 80 %, bezogen auf die Gesamtmasse der Polymermatrix, vorhanden ist.

12. Zusammensetzung gemäß einem der Ansprüche 10 bis 11, **dadurch gekennzeichnet, dass** das lineare Polyamid ausgewählt ist unter den Polyamiden, die durch Polykondensation zwischen einer aliphatischen oder aromatischen gesättigten Disäure und einem aromatischen oder aliphatischen gesättigten primären Diamin, einem Lactam, einer Aminosäure oder einem Gemisch dieser verschiedenen Monomere erhalten werden.

13. Zusammensetzung gemäß Anspruch 12, **dadurch gekennzeichnet, dass** das lineare Polyamid ein aliphatisches und/oder semikristallines Polyamid oder Copolyamid, das aus der Gruppe, die PA 66, PA 6, PA 4.6, PA 12 umfasst, ausgewählt ist, oder ein semikristallines semiaromatisches Polyamid oder Copolyamid ist, das aus der Gruppe, die die Polyphthalamide umfasst, ausgewählt ist.

14. Zusammensetzung gemäß einem der Ansprüche 8 bis 13, **dadurch gekennzeichnet, dass** die Gewichtskonzentration an Füllstoff geringer als 80 Gew.-% der Zusammensetzung ist.

15. Zusammensetzung gemäß einem der Ansprüche 8 bis 14, **dadurch gekennzeichnet, dass** die Füllstoffe Füllstoffe zum Verstärken oder zum Füllen sind, die aus der Gruppe ausgewählt sind, die die faserförmigen Füllstoffe, wie Glasfaser, Kohlenstofffaser, mineralische Faser oder eine aus wärmehärtbarem Material, die pulverförmigen Füllstoffe, wie Talk, umfasst.

16. Zusammensetzung gemäß einem der Ansprüche 8 bis 15, **dadurch gekennzeichnet, dass** die Füllstoffe feuerhemmende Füllstoffe sind.

## Claims

1. Process for the manufacture of a polyamide comprising linear macromolecular chains and macromolecular chains of star type, **characterized in that** it consists in carrying out the polymerization of a mixture of monomers comprising at least:

   a) monomers of following general formula (I):

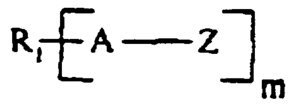 (I)

b) monomers of following general formulae (IIa) and (IIb):

$$X—R_2—Y \qquad (IIa)$$

or

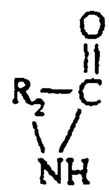 (IIb)

c) monomers of following general formula (III):

$$Z\text{-}R_3\text{-}Z \qquad (III)$$

in which formulae:

· $R_1$ is a linear or cyclic, aromatic or aliphatic, hydrocarbon-comprising radical comprising at least two carbon atoms and which can comprise heteroatoms,
· A is a covalent bond or an aliphatic hydrocarbon-comprising radical comprising from 1 to 6 carbon atoms,
· Z represents a primary amine radical or a carboxyl group,
· $R_2$ and $R_3$, which are identical or different, represent substituted or unsubstituted, aliphatic, cycloaliphatic or aromatic, hydrocarbon-comprising radicals comprising from 2 to 20 carbon atoms, and which can comprise heteroatoms,
· Y is a primary amine radical when X represents a carboxyl radical,
or
· Y is a carboxyl radical when X represents a primary amine radical,
m is an integer between 3 and 8,

and **in that** the polymerization is carried out until thermodynamic equilibrium is achieved; the molar ratio of the monomers of formula (I) to the monomers of formula (III) is between 2 and 8.

**2.** Process according to Claim 1, **characterized in that** the molar concentration of monomers of formula (I) is between 0.1% and 2%, expressed as molar % with respect to all the monomers, and the molar concentration of monomers of formula (III) is between 0.1% and 2%, the remainder to 100% being composed of the monomers of formula (IIa) or (IIb).

**3.** Process according to either of the preceding claims, **characterized in that** it is carried out in the presence of a polycondensation initiating agent.

**4.** Process according to one of the preceding claims, **characterized in that** the radical $R_1$ is a cyclohexanonyl radical.

**5.** Process according to one of the preceding claims, **characterized in that** $R_3$ is a polymethylene radical comprising from 2 to 36 carbon atoms.

**6.** Process according to one of the preceding claims, **characterized in that** the monomer of formula (IIb) is ε-caprolactam.

7. Polyamide which can be obtained according to the process described in one of Claims 1 to 6, **characterized in that** it comprises a percentage by number of macromolecular chains of star type of between 50% and 90%.

8. Composition comprising a polymeric matrix and fillers, **characterized in that** the polymeric matrix comprises at least one polyamide which can be obtained by a process according to one of Claims 1 to 6.

9. Composition according to Claim 8, **characterized in that** it comprises a polymeric matrix composed of a polyamide which can be obtained according to one of Claims 1 to 6.

10. Composition according to Claim 8, **characterized in that** it comprises a polymeric matrix composed of a mixture of a linear polyamide and of a polyamide which can be obtained by a process according to one of Claims 1 to 6.

11. Composition according to Claim 10, **characterized in that** the polyamide according to Claims 1 to 6 is present at a concentration by weight of between 30% and 80% with respect to the total mass of the polymeric matrix.

12. Composition according to either of Claims 10 and 11, **characterized in that** the linear polyamide is chosen from polyamides obtained by polycondensation between an aromatic or aliphatic saturated diacid and an aliphatic or aromatic saturated primary diamine, a lactam, an amino acid or a mixture of these various monomers.

13. Composition according to Claim 12, **characterized in that** the linear polyamide is an aliphatic and/or semicrystalline polyamide or copolyamide chosen from the group comprising PA-66, PA-6, PA-4,6 or PA-12 or a semicrystalline semiaromatic polyamide or copolyamide chosen from the group comprising polyphthalamides.

14. Composition according to one of Claims 8 to 13, **characterized in that** the concentration by weight of filler is less than 80% by weight of the composition.

15. Composition according to one of Claims 8 to 14, **characterized in that** the fillers are reinforcing or bulking fillers chosen from the group comprising fibrous fillers, such as glass fibres, carbon fibres, mineral fibres or fibres made of thermosetting material, or powder fillers, such as talc.

16. Composition according to one of Claims 8 to 15, **characterized in that** the fillers are flame-retardant fillers.